(19) Europäisches Patentamt / European Patent Office / Office européen des brevets

(11) **EP 2 053 422 A1**

(12) **EUROPEAN PATENT APPLICATION**

(43) Date of publication:
29.04.2009 Bulletin 2009/18

(51) Int Cl.:
*G01S 13/38* (2006.01)　　　*G01S 13/58* (2006.01)
*G01S 13/62* (2006.01)　　　*G01S 13/93* (2006.01)

(21) Application number: 08167415.2

(22) Date of filing: 23.10.2008

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.10.2007 JP 2007275156**

(71) Applicant: **Omron Corporation**
**Kyoto-shi, Kyoto 600-8530 (JP)**

(72) Inventors:
• **Ichiyanagi, Hoshibumi**
**Kyoto-shi**
**Kyoto 600-8530 (JP)**

• **Ohara, Hideyuki**
**Kyoto-shi**
**Kyoto 600-8530 (JP)**
• **Nishidai, Tetsuo**
**Kyoto-shi**
**Kyoto 600-8530 (JP)**
• **Numata, Hiroyuki**
**Kyoto-shi**
**Kyoto 600-8530 (JP)**

(74) Representative: **Brykman, Georges**
**Osha Liang**
**32 avenue de l'Opéra**
**75002 Paris (FR)**

(54) **Rear side and side radar for object detection and according to sense-of-movement of objects filtering**

(57)　A measuring device (1, 101), installed on a rear side or a side of a vehicle, for measuring an object using a reflected signal at the object of a transmission signal transmitted at a predetermined frequency, the measuring device (1, 101) includes recognizing means (61) for recognizing an object behind or beside the vehicle, discriminating means (1) for discriminating the recognized objects to an object moving closer to the vehicle and an object moving away from the vehicle, extracting means (62) for extracting only the object discriminated as moving closer to the vehicle from the recognized objects based on a discrimination result of moving closer or moving away, and calculating means (62) for calculating at least one of a distance or a relative velocity with the extracted object.

Fig. 8

**Description**

BACKGROUND OF THE INVENTION

1. Technical Field

The present invention relates to a measuring device and method, and in particular, to a measuring device and a method capable of calculating information related to an object with less amount of calculation.

2. RELATED ART

Conventionally, a two-frequency CW (Continuous Wave) type sensor (hereinafter referred to as a two-frequency CW radar) is known as a sensor for measuring relative velocity and distance between own vehicle and another vehicle (refer to, for example, Japanese Patent No. 3203600, Japanese Unexamined Patent Publication No. 2004-69693). In other words, the two-frequency CW radar detects a frequency of a Doppler signal (hereinafter referred to as Doppler frequency) and a phase of a Doppler signal with respect to a reflected signal at an object of a transmission signal, and measures the relative velocity and the distance of the other vehicle using its detection result.
An automobile (own vehicle) is mounted with an ACC (Adaptive Cruise Control) system for automatically following a leading vehicle (other vehicle) while maintaining an inter-vehicle distance constant using a sensor such as the two-frequency CW radar. In recent years, a pre-crash system is mounted for alleviating an impact in time of crash by detecting close-to-crash state (pre-crush) of the own vehicle and the other vehicle using the sensor such as the two-frequency CW radar.
As such, a plurality of system of different applications using a signal from the sensor are mounted in the automobile.

SUMMARY

A process of detecting all objects within a detection range, and extracting an object corresponding to the purpose therefrom by calculation is carried out with the conventional radar.
For instance, considering a case where an in-vehicle radar mounted at a front side of an own vehicle is used for an ACC, a shape of a road is estimated from a guard rail on the road side and a steering angle, and the other vehicle existing at the front side of the road is specified from such a shape to specify the other vehicle traveling in front.
In other words, since the reflected waves from all the objects to which electric wave reaches are received in this case, a process of extracting the necessary object therefrom according to the application is required. The problem is that an amount of calculation in the process of extracting the necessary object thus increases.
The same thing is true for the in-vehicle radar aiming to prevent danger like collision avoidance, in which case, a process of extracting an object that is a danger to the own vehicle from the detected object group and tracking the same is carried out.
The present invention was made in view of the above problems to enable information related to an object to be calculated with less amount of calculation.
In accordance with one aspect of the present invention, a measuring device of one aspect of the present invention relates to a measuring device, installed on a rear side or a side of a vehicle, for measuring an object using a reflected signal at the object of a transmission signal transmitted at a predetermined frequency, the measuring device including a recognizing section for recognizing an object behind or beside the vehicle; a discriminating section for discriminating the recognized objects to an object moving closer to the vehicle and an object moving away from the vehicle; an extracting section for extracting only the object discriminated as moving closer to the vehicle from the recognized objects based on a discrimination result of moving closer or moving away; and a calculating section for calculating at least one of a distance or a relative velocity with the extracted object.
Thus, the amount of calculation in the process for performing the risk degree determination such as tracking process can be reduced, and the radar can be configured with a more inexpensive calculation component.
In other words, the calculating section can calculate the distance, the relative velocity and the like with the object that is moving closer to the own vehicle of the objects identified as being behind or beside the own vehicle. This means that the other vehicles having the possibility of crashing can be narrowed down in advance.
Each section is configured by a microcomputer, a calculation control circuit, or a combination thereof. In other words, each section does not need to be configured in one unit (e.g., unit of circuit substrate and the like), and may be configured by being divided into few units. Each section does not need to be individually configured, and may be configured by combining a plurality of sections, that is, with a plurality of section as one unit.
The transmission signal includes a first transmission signal having a first frequency and a second transmission signal having a second frequency; a mixed signal generated from the transmission signal and the reflected signal includes a first Doppler signal generated based on the first transmission signal and a second Doppler signal generated based on the second transmission signal; the recognizing section recognizes the object behind or beside the vehicle based on the Doppler frequency obtained by performing an FFT (Fast Fourier Transform) analyzing process on the first Doppler signal and the second Doppler signal; and the discriminating section discriminates the identified objects to the object moving closer or moving away based on a phase obtained by the FFT analyzing process.

Thus, the two-frequency CW radar can be easily used for the measuring device. In this case, since two types of continuous waves having different frequencies are transmitted as transmission signals, two types of mixed signals are generated, one for each frequency.

The calculating section calculates the distance or the relative velocity based on the Doppler frequency obtained by the FFT analyzing process, or a phase difference of the first Doppler signal and the second Doppler signal.

For instance, if one mixed signal is used, the relative velocity with the object can be measured from the Doppler frequency contained in the mixed signal. If two types of mixed signals are used, the phase difference thereof is obtained, and therefore, the distance with the object can be measured from the phase difference.

The measuring device is a two-frequency CW (Continuous Wave) type radar.

An output section for outputting a calculation result by the calculating section to an information processing device for performing a predetermined process using the calculation result obtained by the calculating section is further arranged.

Thus, in the processing calculation device used as the information processing device, the calculation process merely needs to be performed only on the other vehicle that is moving closer to the own vehicle. As a result, the amount of calculation for the risk degree determination can be reduced.

A processing section for performing a predetermined process using a calculation result obtained by the calculating section is further arranged.

Thus, in the calculation processing unit serving as a processing section, the calculation process merely needs to be performed only on the other vehicle that is moving closer to the own vehicle, and the amount of calculation for the risk degree determination can be reduced.

In accordance with one aspect of the present invention, a measuring method of one aspect of the present invention is a method corresponding to the measuring device of one aspect of the present invention described above.

Therefore, according to one aspect of the present invention, information related to the object can be calculated with less amount of calculation. In particular, the risk degree can be determined with less amount of calculation.

BRIEF DESCRIPTION OF THE DRAWINGS

FIG. 1 shows an explanatory view describing a case where a radar is installed on a front side of an own vehicle;
FIG. 2 shows an explanatory view describing a case where the radar is installed on a rear side of the own vehicle;
FIG. 3 shows a block diagram showing a configuration example of a measuring system applied with the present invention;
FIG. 4 shows a block diagram showing a detailed configuration example of a two-frequency CW radar of FIG. 3;
FIG. 5 shows an explanatory diagram describing one example of a method of separating a Doppler signal having two Doppler frequencies $\Delta f1$, $\Delta f2$;
FIG. 6 shows a block diagram showing a detailed configuration example of a calculation control unit of FIG. 4;
FIG. 7 shows a flowchart describing an approaching object extracting process;
FIG. 8 shows a block diagram showing a configuration example of a measuring device applied with the present invention; and
FIG. 9 shows a block diagram showing another example of a configuration of the entire or one part of the measuring system or the measuring device applied with the present invention.

DETAILED DESCRIPTION

An embodiment of the present invention will be described below with reference to the drawings.

The present invention focuses on the fact that an extracting target is limited to an "object that is approaching" when a radar is used to prevent danger, and has a feature in that only the object which velocity is an approaching direction in calculation in the radar is extracted as a "dangerous object". This is particularly effective when the relevant radar is installed at the rear side of the vehicle.

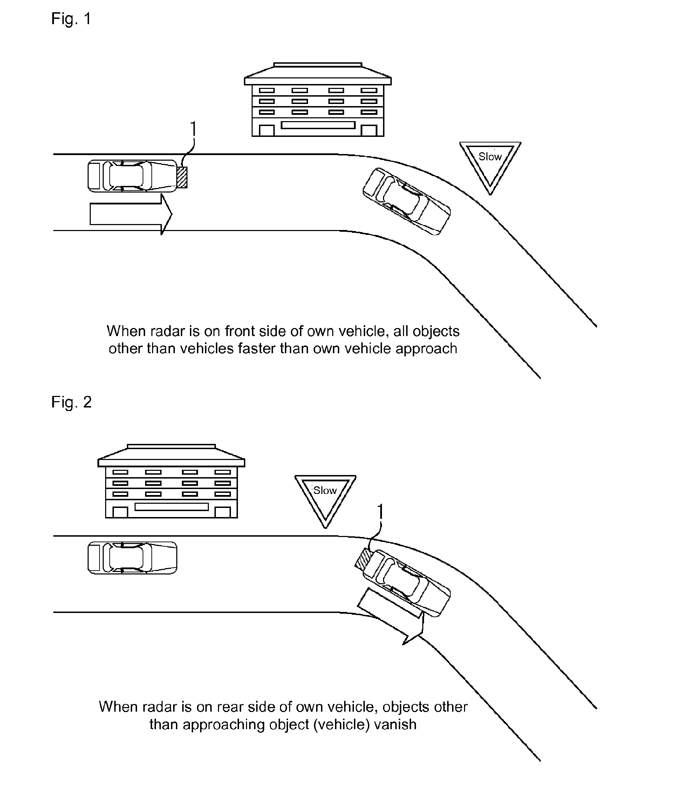

A principle of extracting the "dangerous object" in the present invention will be described with reference to FIGS. 1 and 2.

In FIG. 1, two vehicles are traveling from the left towards the right in the figure. A radar 1 is installed at the front side of the vehicle (own vehicle) on the left side of the two vehicles, and the vehicle (other vehicle) on the right side, which is the other vehicle, traveling in front of the own vehicle, buildings, road signs and the like are detected by the radar 1.

In this case, objects other than vehicle faster than the own vehicle, that is, vehicle slower than the own vehicle, buildings, road signs, wall surfaces, signs, and the like are extracted as the "object that is approaching".

On the other hand, if the radar 1 is set at the rear side of the vehicle (own vehicle) on the right side of the two vehicles, as shown in FIG. 2, the vehicle (other vehicle) on the left side traveling behind the own vehicle is detected by the radar 1.

In this case, only the other vehicle is extracted as the "object that is approaching" because the objects other than the approaching object (other vehicle) are vanishing.

In other words, objects other than the vehicle faster than the own vehicle all need to be extracted as the "object that is approaching" if the radar 1 is installed at the front side of the own vehicle as in FIG. 1, but only the other vehicle approaching the own vehicle needs to be extracted as the "object that is approaching" if the radar 1 is installed at the rear side of the own vehicle as in FIG. 2 since objects other than the approaching object (other vehicle) are vanishing. As a result, a danger judgment process does not need to be performed not only on the vanishing other vehicle, but also on objects such as buildings, road signs, wall surfaces, and signs that relatively vanish (towards the back side in the advancing direction of the own vehicle), and thus the degree of risk can be determined with less amount of calculation.

A measuring system for performing a process of extracting only the other vehicle traveling behind or beside the own vehicle as the approaching object, as the "object that is approaching" according to the above-described principle will now be described.

Various radars may be used for the radar 1 used in the relevant measuring system, but a case where a radar (hereinafter referred to as a two-frequency CW radar 1) for performing the measurement with the two-frequency CW method is adopted will be described in the present embodiment. Other methods of the radar include FMCW (Frequency Modulated Continuous Wave) and UWB (Ultra Wide Band).

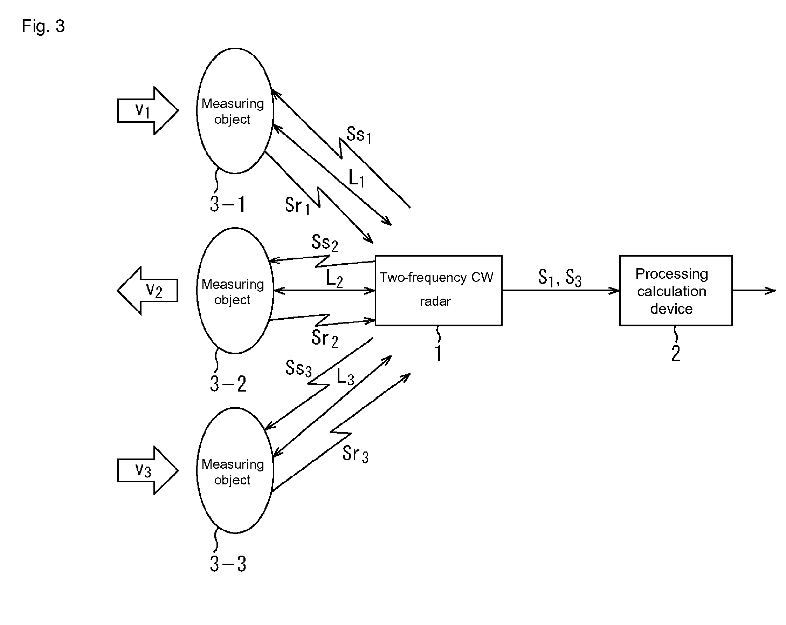

FIG. 3 shows a configuration example of one embodiment of the measuring system applied with the present invention.

The measuring system of FIG. 3 is configured by the two-frequency CW radar 1 serving as a measuring device described in the Claims and a processing calculation device 2. The processing calculation device 2 may be configured by a microcomputer and the like.

The two-frequency CW radar 1 can carry out the measurement by the two-frequency CW method as can be inferred from the name. The two-frequency CW radar 1 is installed at the rear side or the side of the own vehicle.

A simple overview of the measurement by the two-frequency CW method will be described below.

The two-frequency CW radar 1 generates a signal (hereinafter referred to as a two-frequency CW) obtained as a result of switching the CW (Continuous Wave) of frequency f1 and the CW of frequency f2 in time division, and outputs the two-frequency CW as a transmission signal Ss.

The transmission signal Ss is reflected by a measuring object 3, and a reflected signal thereof is received by the two-frequency CW radar 1 as a reception signal Sr.

Here, if a relative velocity v exists between the two-frequency CW radar 1 and the measuring object 3, Doppler frequencies $\Delta f1$, $\Delta f2$ are generated with respect to the frequencies f1, f2, respectively, of the transmission signal Ss, and as a result, the frequency of the reception signal Sr becomes frequencies $f1 + \Delta f1$, $f2 + \Delta f2$. In other words, the two-frequency CW having two frequencies $f1 + \Delta f1$, $f2 + \Delta f2$ becomes the signal equivalent to the reception signal Sr.

The two-frequency CW radar 1 detects the Doppler frequency $\Delta f1$ or $\Delta f2$ from the reception signal Sr, and performs the calculation of equation (1) or equation (2) below to obtain the relative velocity v of the measuring object 3 with respect to the two-frequency CW radar 1.

$$v = c \times \Delta f1/(2 \times f1) \qquad (1)$$

$$v = c \times \Delta f2/(2 \times f2) \qquad (2)$$

where, c represents velocity of light.

The two-frequency CW radar 1 detects a phase $\phi1$ of the Doppler signal or the Doppler frequency $\Delta f1$, and a phase $\phi2$ of the Doppler signal or the Doppler frequency $\Delta f2$ from the reception signal Sr, and performs the calculation of equation (3) below, to obtain a distance L between the two-frequency CW radar 1 and the measuring object 3.

$$L = c \times (\phi1-\phi2)/(4\pi \times (f1-f2)) \qquad (3)$$

The measurement carried out by such series of processes is the measurement by the two-frequency CW method.

As described above, the two-frequency CW radar 1 performs a process of extracting not all objects within a detection range but only the object approaching the own vehicle as a target (object) having a possibility of being dangerous, in the present embodiment.

Specifically, as shown in FIG. 3, if three measuring objects of measuring object 3-1 to measuring object 3-3 are measured by the two-frequency CW radar 1, transmission signal Ss1 to transmission signal Ss3 are outputted with respect to the respective measuring objects, the transmission signal Ss1 to the transmission signal Ss3 are reflected by the corresponding measuring object, and the reflected signal is received by the two-frequency CW radar 1 as reception signal Sr1 to reception signal Sr3.

The two-frequency CW radar 1 performs a predetermined analyzing process on the received reception signal Sr1 to reception signal Sr3 to discriminate the measuring object 3-1 to the measuring object 3-3 to the object moving closer to or approaching the own vehicle and the object moving away from the own vehicle, respectively. In the case of the example of FIG. 3, discrimination is made that the measuring object 3-1 and the measuring object 3-3 are the objects moving closer to the own vehicle, and the measuring object 3-2 is the object moving away from the own vehicle, as shown by the direction of the arrow on the left side of each measuring object in the figure.

The two-frequency CW radar 1 then calculates a relative velocity v, a distance L, and the like with the measuring objects with respect to the object approaching the own vehicle, that is, the measuring object 3-1 and the measuring object 3-3, and outputs the same to the processing calculation device 2. The method of calculating the relative velocity v and the distance L is as described above.

The processing calculation device 2 performs a predetermined process such as tracking process for carrying out the risk degree determination process based on the measurement results s1, s3 (measurement result of the measuring object 3-1 and the measuring object 3-3 approaching the own vehicle) provided from the two-frequency CW radar 1.

The measuring system is configured as above.

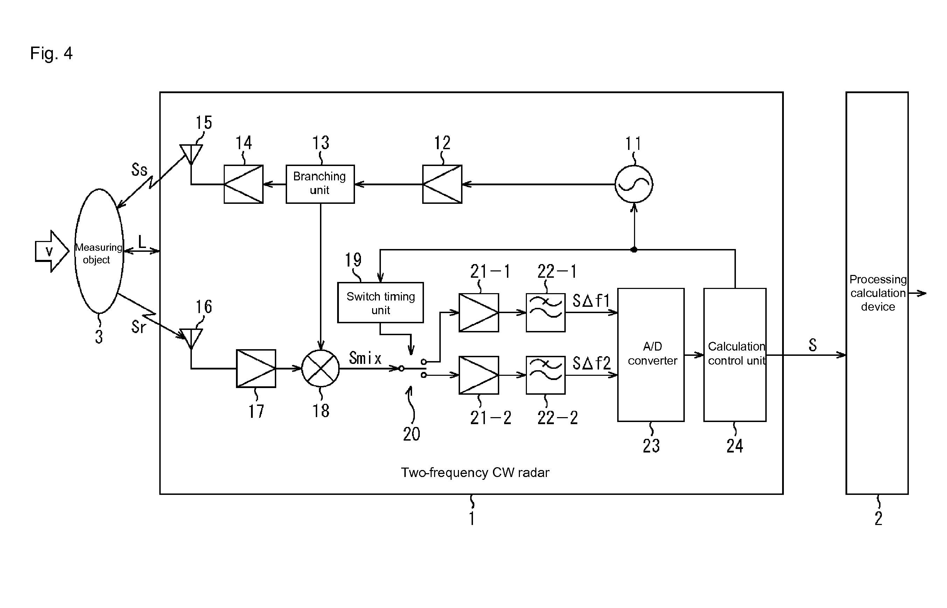

The detailed configuration of the two-frequency CW radar 1 will be described below with reference to FIG. 4.

In FIG. 4, only a measuring object 3 approaching the own vehicle is illustrated in place of the measuring object 3-1 to the measuring object 3-3 of FIG. 3 to simplify the description.

The two-frequency CW radar 1 in the example of FIG. 4 is configured to include an oscillator 11 to a calculation control unit 24.

The oscillator 11 alternately switches and oscillates the CW of frequency f1 and the CW of frequency f2 based on the control of the calculation control unit 24. That is, the two-frequency CW having frequencies f1, f2 is outputted from the oscillator 11, and provided to an amplifier 12.

The amplifier 12 appropriately performs various processes such as amplification process on the two-frequency CW, and provides the resultant to a branching unit 13.

The branching unit 13 provides the two-frequency CW from the amplifier 12, that is, the two-frequency CW having frequencies f1, f2 to an amplifier 14 and a mixing unit 18.

The amplifier 14 appropriately performs various processes such as amplification process on the two-frequency CW from the branching unit 13, that is, the two-frequency CW having frequencies f1, f2, and provides a signal obtained as a result to an antenna unit 15 as an output signal. The output signal of the amplifier 14 is outputted from the antenna unit 15 in the form of electric wave as the transmission signal Ss.

The two-frequency CW is modulated by a predetermined modulation method, as necessary, and then outputted from the antenna unit 15 as the transmission signal Ss. This modulation process is executed in the amplifier 14.

The transmission signal Ss is reflected by the measuring object 3, and the reflected signal is received by an antenna unit 16 as the reception signal Sr.

In the example of FIG. 4, the antenna unit 15 for transmission and the antenna unit 16 for reception are separately arranged, but one antenna unit used for both transmission and reception may be arranged.

An amplifier 17 appropriately performs various processes such as amplification process on the reception signal Sr received by the antenna unit 16, and provides the two-frequency CW obtained as a result to the mixing unit 18 as an output signal. If the amplifier 14 executed the modulation process, the amplifier 17 executes a demodulation process corresponding to the modulation process to obtain the two-frequency CW described above.

The two-frequency CW outputted from the amplifier 17, that is, the two-frequency CW obtained from the reception signal Sr has the frequency f1 + $\Delta$f1 and the frequency f2 + $\Delta$f2, as described above. In other words, the CW of frequency f1 + $\Delta$f1 and the CW of frequency f2 + $\Delta$f2 are alternately switched as if in time division and sequentially outputted from the amplifier 17.

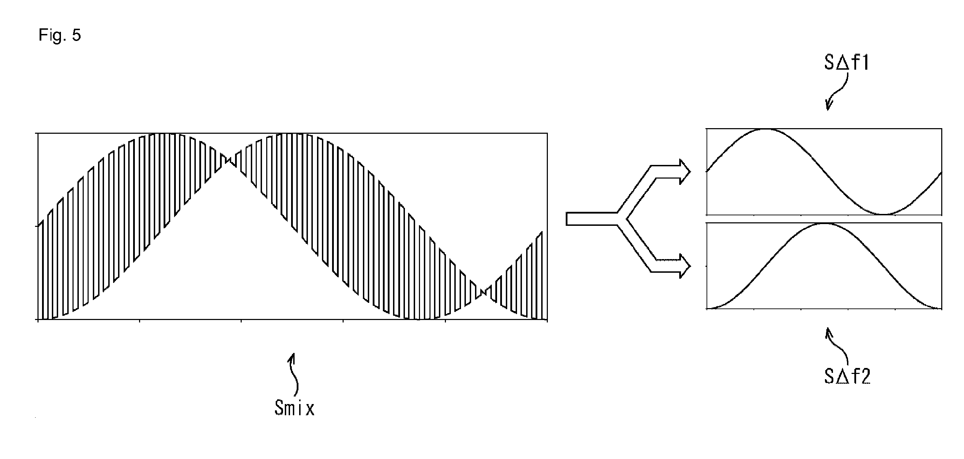

The mixing unit 18 mixes the two-frequency CW (two-frequency CW having frequencies f1 + Δf1, f2 + Δf2) outputted from the amplifier 17 and the two-frequency CW (two-frequency CW having frequencies f1, f2) outputted from the branching unit 13, and outputs a mixed signal Smix obtained as a result, specifically, a mixed signal Smix having a waveform shown in FIG. 5 to a switch unit 20.

The switch unit 20 switches an output destination from one to the other between an amplifier 21-1 and an amplifier 21-2 based on the control of a switch timing unit 19. That is, the switch timing unit 19 monitors a switch timing of the oscillation frequencies f1, f2 of the oscillator 11 by the calculation control unit 24, and switches the output destination of the switch unit 20 to the amplifier 21-1 side at a timing the frequency is switched from f2 to f1, or switches the output destination of the switch unit 20 to the amplifier 21-2 side at a timing the frequency is switched from f1 to f2.

In other words, of the mixed signal Smix, the signal outputted from the mixing unit 18 while the oscillator 11 is oscillating the CW of frequency f1 is provided to the amplifier 21-1 via the switch unit 20 and appropriately performed with various processes such as amplification process, and removed with high-pass component (noise etc.) by a low-pass filter unit 22-1, and then provided to an A/D converter 23 as a signal SΔf1. The signal SΔf1 is a Doppler signal having a Doppler frequency Δf1.

Of the mixed signal Smix, the signal outputted from the mixing unit 18 while the oscillator 11 is oscillating the CW of frequency f2 is provided to the amplifier 21-2 via the switch unit 20 and appropriately performed with various processes such as amplification process, and removed with high-pass component (noise etc.) by a low-pass filter unit 22-2, and then provided to the A/D converter 23 as a signal SΔf2. The signal SΔf2 is a Doppler signal having a Doppler frequency Δf2.

In other words, as shown in FIG. 5, the mixed signal Smix outputted from the mixing unit 18 is separated to the Doppler signal SΔf1 having the Doppler frequency Δf1 and the Doppler signal SΔf2 having the Doppler frequency Δf2 by the switch timing unit 19 to the low pass filter unit 22-2, and respectively provided to the A/D converter 23.

The A/D converter 23 performs an A/D conversion (Analog to Digital conversion) process on the Doppler signal SΔf1 having Doppler frequency Δf1 and the Doppler signal SΔf2 having Doppler frequency Δf2, respectively, and provides the digital Doppler signal SΔf1 and the Doppler signal SΔf2 obtained as a result to the calculation control unit 24.

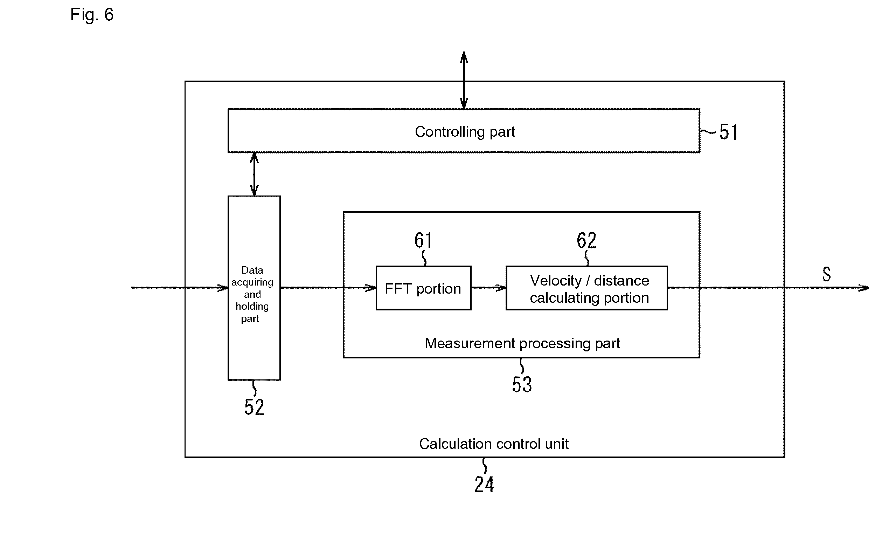

The detailed configuration example of the calculation control unit 24 is shown in FIG. 6. In the example of FIG. 6, the calculation control unit 24 is configured to include a controlling part 51 to a measurement processing part 53.

The controlling part 51 controls the interior of the calculation control unit 24, and also controls the entire two-frequency CW radar 1, such as the switching of the frequency of the CW oscillated by the oscillator 11 from one to the other between f1 and f2 as described above.

A data acquiring and holding part 52 individually acquires and holds the Doppler signal SΔf1 having the Doppler frequency Δf1 and the Doppler signal SΔf2 having the Doppler frequency Δf2 sequentially provided in the form of digital data from the A/D converter 23. The holding amount of data in the data acquiring and holding part 52 is not particularly limited as long as it is greater than or equal to the amount of data necessary for one measurement process of the measurement processing part 53 to be hereinafter described.

The measurement processing part 53 is configured to include an FFT portion 61 and a velocity/distance calculating portion 62.

The FFT portion 61 collects the data held in the data acquiring and holding part 52. The following measurement process is then executed by the FFT portion 61 and the velocity/distance calculating portion 62.

In other words, the FFT portion 61 performs FFT (Fast Fourier Transform) analyzing process and the like on the collected data to detect the Doppler frequency Δf1 and the phase φ1 thereof, and detect the Doppler frequency Δf2 and the phase φ2 thereof, and provides the detection result thereof (hereinafter referred to as an FFT analysis result) to the velocity/distance calculating portion 62.

The velocity/distance calculating portion 62 extracts only the measuring object 3 approaching the own vehicle from all the object groups within the detection range based on the FFT analysis result from the FFT portion 61, and calculates the relative velocity v, the distance L, and the like of the extracted measuring object 3. The velocity/distance calculating portion 62 then generates a measurement result s including the relative velocity v and the distance L, and outputs the measurement result s to the processing calculation device 2.

The operation example of the two-frequency CW radar 1 of FIG. 4 will now be described.

The operations executed by the oscillator 11 to the A/D converter 23 are basically the same as the conventional operation, and can be easily understood referring to the description of the configuration of the oscillator 11 to the A/D converter 23 described above, and thus the description thereof will not be given here.

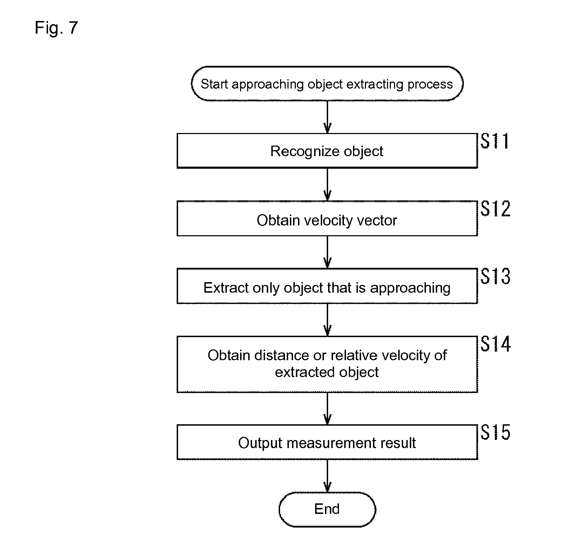

The operation example of the measurement processing part 53 of the calculation control unit 24 having the configuration of FIG. 6, which is the characteristic block of the present invention, of the two-frequency CW radar 1 will be particularly described with reference to the flowchart of FIG. 7.

In step S11, the velocity/distance calculating portion 62 detects the peak of the Doppler frequency based on the FFT analysis result provided from the FFT portion 61 to recognize the object group (in the example of FIG. 3, measuring object 3-1 to measuring object 3-3) behind or beside the own vehicle. The object group referred to herein includes not only the plurality of measuring objects, but also one measuring object.

In step S12, the velocity/distance calculating portion 62 obtains the velocity vector of the recognized object group based on the FFT analysis result provided from the FFT portion 61. That is, whether the recognized object is moving closer or moving away can be determined from the velocity vector. Specifically, in the FFT portion 61, the real number and the imaginary number are obtained when the FFT analyzing process is carried out, and the phase is calculated from the ratio of the real number and the imaginary number, where whether moving closer or moving away is determined by the relevant phase.

In step S13, the velocity/distance calculating portion 62 extracts only the object moving closer to the own vehicle from the recognized object group based on the velocity vector.

In step S14, the velocity/distance calculating portion 62 calculates at least one of the distance L or the relative velocity v with the object extracted as approaching the own vehicle.

For instance, in FIG. 3, the measuring object 3-1 and the measuring object 3-3 are extracted as the objects that are approaching from the measuring object 3-1 to the measuring object 3-3, and thus the velocity/distance calculating portion 62 calculates the distance L1 and the relative velocity v1 with the measuring object 3-1, and the distance L3 and the relative velocity v3 with the measuring object 3-3, respectively.

More specifically, the velocity/distance calculating portion 62 calculates equation (1) using the Doppler frequency $\Delta f1$ from the FFT portion 61 or calculates equation (2) using the Doppler frequency $\Delta f2$ from the FFT portion 61, and sets the calculation result as the relative velocity v1 of the measuring object 3-1 and the relative velocity v3 of the measuring object 3-3.

The velocity/distance calculating portion 62 calculates the difference between the phase $\phi1$ and the phase $\phi2$ from the FFT portion 61, that is, the phase difference $\phi1-\phi2$, calculates equation (3) using the phase difference $\phi1-\phi2$, and sets the calculation result as the distance L1 of the measuring object 3-1 and the distance L3 of the measuring object 3-3.

In step S15, the velocity/distance calculating portion 62 generates the measurement result s including the relative velocity v and the distance L, and outputs the measurement result to the processing calculation device 2, whereby the approaching object extracting process is terminated.

For instance, in the example of FIG. 3, the measurement result s1 including the relative velocity v1 and the distance L1 of the measuring object 3-1, and the measurement result s3 including the relative velocity v3 and the distance L3 of the measuring object 3-3 are outputted to the processing calculation device 2. The processing calculation device 2 performs a predetermined process using the measurement result of the two-frequency CW method such as tracking process using the measurement results s1 and s3.

The process executed by the processing calculation device 2 is not particularly limited as long as it is a process that uses the measuring process result of the two-frequency CW method.

Therefore, only the object approaching the own vehicle is extracted from the object group behind or beside the recognized own vehicle in the velocity/distance calculating portion 62 in the above manner, and then the distance, the relative velocity, and the like with the extracted object are calculated.

In other words, according to the present embodiment, in the two-frequency CW radar 1, which is one example of a danger-prevention radar mounted at the rear side of the own vehicle, objects other than those advancing in the direction of the own vehicle at a speed faster than the own vehicle move in the direction relatively moving away from the own vehicle when the own vehicle advances forward, and thus using this fact, only the object originally approaching the own vehicle is extracted as the target (object) having the possibility of being dangerous by the radar output, and the process of determining the degree of risk is performed only on the extracted target.

Consequently, the amount of calculation in the process for performing the risk degree determination such as tracking process executed by the processing calculation device 2 can be reduced, and the radar can be built with a more inexpensive calculation component.

In the present embodiment, the measurement by the two-frequency CW method has been described by way of example, but methods such as FMCW and UWB may be adopted, as described above. When the FMCW method is adopted, the object that is approaching can be extracted by performing the approaching object extracting process of FIG. 7, similar to the two-frequency CW method. When the UWB method is adopted, the velocity vector cannot be directly obtained as in the two-frequency CW method, and thus the distance with the identified object is obtained, and then the velocity vector is obtained based on the distance relationship of before and after in time. The process after obtaining the velocity vector is similar to the approaching object extracting process of FIG. 7 (steps S13 to S15 of FIG. 7) by the two-frequency CW method.

In the above-described example, description has been made that all the approaching objects are extracted, but when performing the risk degree determination process, for example, the other vehicle that is approaching cannot be necessarily said as dangerous if the other vehicle is spaced apart from the own vehicle by a certain extent. Thus, the relevant object can be ignored even if the object is the object that is approaching in a case where the distance L is smaller than a reference value.

The configuration of the present invention described above is not only applicable to the system of the configuration of FIGS. 3 and 4, and is also applicable to devices and systems of various configurations.

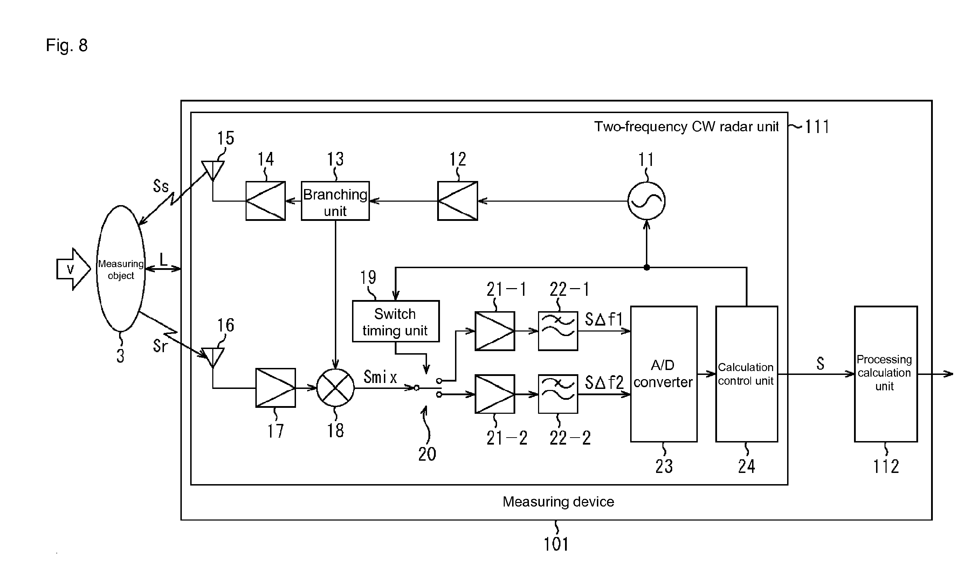

The system represents the entire device configured by a plurality of processing devices and processing units. In other words, the system of FIG. 4 can be considered as one measuring device 101 as shown in FIG. 8. That is, the measuring device 101 in the example of FIG. 8 is one device including a two-frequency CW radar 111 serving as one processing unit corresponding to the two-frequency CW radar 1, and a processing calculation unit 112 serving as one processing unit corresponding to the processing calculation device 2.

In the example described above, the two-frequency CW radar 1 measures only the relative velocity v and the distance L of the measuring object 3, but may measure other physical quantities such as angle of the measuring object 3. The method of measuring the angle in this case is also not particularly limited, and the method of calculating the angle using an amplitude ratio of the sum and the difference of the two antenna reception signals, that is, a so-called mono-pulse method may be adopted by configuring the reception antenna unit 16 of FIG. 4 with two antennas.

Furthermore, a mode of obtaining the phase difference by the FFT analyzing process has been described as one example of a method of obtaining the phase difference in the present embodiment, but the phase difference may be obtained through other methods. For instance, the phase difference may be obtained through the time interval method. The time interval method is a method of detecting the Doppler frequencies $\Delta f1$, $\Delta f2$ or detecting the phase difference $\phi1$-$\phi2$ corresponding thereto by observing the rise time and the fall time of the Doppler signals $\Delta Af1$, $\Delta Af2$.

Note that the rise time and the fall time do not mean the time necessary for the signal voltage to change. That is, the rise time refer to the timing of the state in which the waveform changing state is rising with a predetermined voltage value as a boundary of the timing (time) at which the waveforms of the Doppler signals $S\Delta f1$, $S\Delta f2$ traverse a predetermined voltage value (e.g., 0 V), and the fall time refer to the timing of the state in which the waveform changing state is falling with a predetermined voltage value as a boundary of the timing (time) at which the waveforms traverse a predetermined voltage value (e.g., 0 V).

To accurately observe the rise time and the fall time (position), it is suitable to use not the Doppler signals $S\Delta f1$, $S\Delta f2$ themselves, but to use signals further amplified therefrom.

A series of processes (or process of one portion thereof) described above may be executed by hardware, but may also be executed by software.

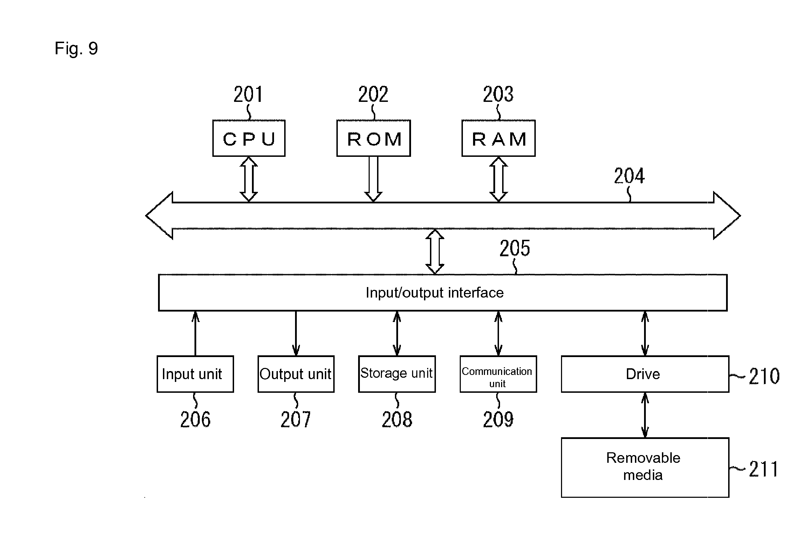

In this case, a device (system of the above-described definition) or one part thereof for executing the series of processes may be configured by a computer as shown in FIG. 9.

In FIG. 9, a CPU (Central Processing Unit) 201 executes various processes according to a program recorded in a ROM (Read Only Memory) 202 or a program loaded in a RAM (Random Access Memory) 203 from a storage unit 208. The RAM 203 is also appropriately stored with data etc. necessary for the CPU 201 to execute the various processes.

The CPU 201, the ROM 202, and the RAM 203 are interconnected by way of a bus 204. The bus 204 is also connected with an input/output interface 205.

The input/output interface 205 is connected with an input unit 206 including a keyboard, a mouse and the like, an output unit 207 including a display and the like, a storage unit 208 configured by a hard disk and the like, and a communication unit 209 configured by a modem, a terminal adapter and the like. The communication unit 209 performs a communication process with another device through a network including the Internet. The communication unit 209 also performs a transmission/reception process of the transmission signal Ss and the reception signal Sr for measuring the measuring object 3 in FIG. 3 and the like, as necessary.

The input/output interface 205 is also connected with a drive 210, as necessary, and appropriately loaded with a removable media 211 including a magnetic disk, an optical disk, a magnetic optical disk, or semiconductor memory, where the computer program read out therefrom is installed in the storage unit 208, as necessary.

When executing the series of processes by software, the program configuring the software is installed from a network or a recording medium to a computer incorporated in a dedicated hardware, or a general-purpose personal computer capable of executing various functions by installing various programs.

As shown in FIG. 9, the recording medium including such a program is configured not only by the removable media (package media) 211 including a magnetic disk (including a floppy disk), an optical disk (including a CD-ROM (Compact Disk-Read Only Memory), a DVD (Digital Versatile Disk)), a magnetic optical disk (including a MD (Mini-Disk)), and semiconductor memory recorded with the program distributed to the user to provide the program, separate from the device body, but is configured also by the ROM 202 recorded with the program, the hard disk included in the storage unit 208 and the like provided to the user in a state incorporated in advance in the device body.

In the present specification, the steps describing the program stored in the recording medium obviously include the processes executed in time-series in the described order, and also the processes executed in parallel or individually even if not necessarily processed in time-series.

In the present specification, the system represents the entire device configured by a plurality of devices.

The embodiment of the present invention is not limited to the embodiment described above, and various modifications may be made within a scope not deviating from the concept of the present invention.

**Claims**

1. A measuring device (1, 101), installed on a rear side or a side of a vehicle, for measuring an object using a reflected signal at the object of a transmission signal transmitted at a predetermined frequency, the measuring device (1, 101) comprising:

   recognizing means (61) for recognizing an object behind or beside the vehicle;
   discriminating means (1) for discriminating the recognized objects to an object moving closer to the vehicle and an object moving away from the vehicle;
   extracting means (62) for extracting only the object discriminated as moving closer to the vehicle from the recognized objects based on a discrimination result of moving closer or moving away; and
   calculating means (62) for calculating at least one of a distance or a relative velocity with the extracted object.

2. The measuring device (1, 101) according to claim 1, **characterized in that**
   the transmission signal includes a first transmission signal having a first frequency and a second transmission signal having a second frequency;
   a mixed signal generated from the transmission signal and the reflected signal includes a first Doppler signal generated based on the first transmission signal and a second Doppler signal generated based on the second transmission signal;
   the recognizing means (61) recognizes the object behind or beside the vehicle based on the Doppler frequency obtained by performing an FFT (Fast Fourier Transform) analyzing process on the first Doppler signal and the second Doppler signal; and
   the discriminating means (1) discriminates the identified objects to the object moving closer or moving away based on a phase obtained by the FFT analyzing process.

3. The measuring device (1, 101) according to claim 2, **characterized in that** the calculating means (62) calculates the distance or the relative velocity based on the Doppler frequency obtained by the FFT analyzing process, or a phase difference of the first Doppler signal and the second Doppler signal.

4. The measuring device (1, 101) according to claim 3, **characterized in that** the measuring device is a two-frequency CW (Continuous Wave) type radar.

5. The measuring device (1, 101) according to claim 1, further comprising output means (62) for outputting a calculation result by the calculating means (62) to an information processing device (2) for performing a predetermined process using the calculation result obtained by the calculating means (62).

6. The measuring device (1, 101) according to claim 1, further comprising processing means (2) for performing a predetermined process using a calculation result obtained by the calculating means (62).

7. A measuring method of a measuring device (1, 101), installed on a rear side or a side of a vehicle, for measuring an object using a reflected signal at the object of a transmission signal transmitted at a predetermined frequency, the method comprising the steps of:

   recognizing an object behind or beside the vehicle;
   discriminating the recognized objects to an object moving closer to the vehicle and an object moving away from the vehicle;
   extracting only the object discriminated as moving closer to the vehicle from the recognized objects based on a discrimination result of moving closer or moving away; and
   calculating at least one of a distance or a relative velocity with the extracted object.

Fig. 1

When radar is on front side of own vehicle, all objects
other than vehicles faster than own vehicle approach

Fig. 2

When radar is on rear side of own vehicle, objects other
than approaching object (vehicle) vanish

Fig. 3

EP 2 053 422 A1

Fig. 4

Fig. 5

Fig. 6

EP 2 053 422 A1

Fig. 7

```
     ┌─────────────────────────────────────────────┐
     │  Start approaching object extracting process │
     └─────────────────────────────────────────────┘
                          │
                          ▼
     ┌─────────────────────────────────────────────┐  S11
     │              Recognize object               │
     └─────────────────────────────────────────────┘
                          │
                          ▼
     ┌─────────────────────────────────────────────┐  S12
     │             Obtain velocity vector          │
     └─────────────────────────────────────────────┘
                          │
                          ▼
     ┌─────────────────────────────────────────────┐  S13
     │        Extract only object that is approaching │
     └─────────────────────────────────────────────┘
                          │
                          ▼
     ┌─────────────────────────────────────────────┐  S14
     │    Obtain distance or relative velocity of  │
     │               extracted object              │
     └─────────────────────────────────────────────┘
                          │
                          ▼
     ┌─────────────────────────────────────────────┐  S15
     │          Output measurement result          │
     └─────────────────────────────────────────────┘
                          │
                          ▼
                    ┌───────────┐
                    │    End    │
                    └───────────┘
```

Fig. 8

Fig. 8 — Two-frequency CW radar unit (111) within Measuring device (101): Processing calculation unit (112), Calculation control unit (24), A/D converter (23), filters 22-1 (SΔf1), 22-2 (SΔf2), amplifiers 21-1, 21-2, switch (20), Switch timing unit (19), mixer (18) producing Smix, amplifier (17), branching unit (13), amplifiers/mixers 11, 12, 14, antennas 15, 16, Measuring object (3), signals Ss, Sr, distance L, velocity V.

Fig. 9

201          202          203
┌─────┐   ┌─────┐   ┌─────┐
│ C P U │   │ R O M │   │ R A M │
└─────┘   └─────┘   └─────┘

204

205

Input/output interface

| Input unit | Output unit | Storage unit | Communication unit | Drive | 210 |

206          207          208          209

Removable media    211

**EP 2 053 422 A1**

Europäisches Patentamt
European Patent Office
Office européen des brevets

# EUROPEAN SEARCH REPORT

Application Number

EP 08 16 7415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 974 851 A (EATON VORAD TECHNOLOGIES LLC [US]) 26 January 2000 (2000-01-26) <br> * paragraphs [0001], [0010], [0023], [0032], [0048], [0053] * <br> * column 4, lines 17-25 * <br> * column 8, lines 32-34 * <br> * column 9, lines 50-56 * <br> * column 13, lines 6-13 * <br> * column 14, lines 22-26 * <br> ----- | 1-7 | INV. <br> G01S13/38 <br> G01S13/58 <br> G01S13/62 <br> G01S13/93 |
| X | US 6 097 332 A (CROSBY II ROBERT G [US]) 1 August 2000 (2000-08-01) <br> * figure 6b * <br> * column 2, lines 31-34 * <br> * column 4, lines 4-20 * <br> * columns 2-3, lines 59-19 * <br> * columns 7-8, lines 57-1 * <br> * column 8, lines 7-14 * <br> * columns 9-10, lines 26-10 * <br> ----- | 1-7 | |
| A | EP 1 617 233 A (FUJITSU LTD [JP]; FUJITSU TEN LTD [JP]) 18 January 2006 (2006-01-18) <br> * the whole document * <br> ----- | 1-7 | **TECHNICAL FIELDS SEARCHED (IPC)** <br><br> G01S |
| A | WO 2007/014333 A (CLARIANT TECHNOLOGIES CORP [US]) 1 February 2007 (2007-02-01) <br> * the whole document * <br> ----- | 1-7 | |

The present search report has been drawn up for all claims

| Place of search | Date of completion of the search | Examiner |
|---|---|---|
| Munich | 27 February 2009 | Beer, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

## ANNEX TO THE EUROPEAN SEARCH REPORT
## ON EUROPEAN PATENT APPLICATION NO.

EP 08 16 7415

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2009

| Patent document cited in search report | | Publication date | Patent family member(s) | | Publication date |
|---|---|---|---|---|---|
| EP 0974851 | A | 26-01-2000 | AT | 295546 T | 15-05-2005 |
| | | | AU | 751079 B2 | 08-08-2002 |
| | | | AU | 3906199 A | 17-02-2000 |
| | | | BR | 9903338 A | 08-03-2000 |
| | | | CA | 2276975 A1 | 23-01-2000 |
| | | | CN | 1259675 A | 12-07-2000 |
| | | | DE | 69925203 D1 | 16-06-2005 |
| | | | DE | 69925203 T2 | 09-03-2006 |
| | | | ES | 2243033 T3 | 16-11-2005 |
| | | | JP | 2000046942 A | 18-02-2000 |
| | | | KR | 20000011892 A | 25-02-2000 |
| | | | US | 6127965 A | 03-10-2000 |
| US 6097332 | A | 01-08-2000 | AU | 5793598 A | 03-07-1998 |
| | | | WO | 9826308 A1 | 18-06-1998 |
| | | | US | 6025796 A | 15-02-2000 |
| EP 1617233 | A | 18-01-2006 | CN | 1721874 A | 18-01-2006 |
| | | | CN | 101153911 A | 02-04-2008 |
| | | | JP | 2006029858 A | 02-02-2006 |
| | | | KR | 20060005971 A | 18-01-2006 |
| | | | US | 2006012511 A1 | 19-01-2006 |
| WO 2007014333 | A | 01-02-2007 | NONE | | |

EPO FORM P0459

For more details about this annex : see Official Journal of the European Patent Office, No. 12/82

**EP 2 053 422 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3203600 B

- JP 2004069693 A